(19) **Europäisches Patentamt / European Patent Office / Office européen des brevets**

(11) **EP 4 266 110 B1**

(12) **EUROPEAN PATENT SPECIFICATION**

(45) Date of publication and mention
of the grant of the patent:
**02.04.2025 Bulletin 2025/14**

(21) Application number: **21906143.9**

(22) Date of filing: **21.10.2021**

(51) International Patent Classification (IPC):
*G02B 26/10* (2006.01)    *G01C 3/06* (2006.01)
*G01S 7/481* (2006.01)    *G02B 26/08* (2006.01)

(52) Cooperative Patent Classification (CPC):
**G02B 5/136; G01S 7/4817; G01S 17/42;**
**G02B 26/0833; G02B 26/105;** G01S 17/10

(86) International application number:
**PCT/JP2021/038969**

(87) International publication number:
**WO 2022/130779 (23.06.2022 Gazette 2022/25)**

(54) **OPTICAL MODULE AND RANGING DEVICE**

OPTISCHES MODUL UND ENTFERNUNGSMESSVORRICHTUNG

MODULE OPTIQUE ET DISPOSITIF DE TÉLÉMÉTRIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **16.12.2020   JP 2020208213**

(43) Date of publication of application:
**25.10.2023   Bulletin 2023/43**

(73) Proprietor: **Sony Group Corporation**
**Tokyo 108-0075 (JP)**

(72) Inventors:
• **ONO, Tomoki**
**Tokyo 108-0075 (JP)**

• **ICHIKAWA, Susumu**
**Tokyo 108-0075 (JP)**
• **SUGIYAMA, Tsubasa**
**Tokyo 108-0075 (JP)**

(74) Representative: **D Young & Co LLP**
**3 Noble Street**
**London EC2V 7BQ (GB)**

(56) References cited:
| | |
|---|---|
| EP-A1- 1 890 168 | EP-A1- 2 378 309 |
| WO-A1-2019/172307 | JP-A- 2010 217 782 |
| JP-A- 2010 217 782 | JP-A- 2015 129 678 |
| JP-A- H 032 512 | JP-A- S6 413 515 |
| KR-A- 20190 025 115 | KR-A- 20190 025 116 |
| US-A1- 2020 025 893 | |

**Description**

TECHNICAL FIELD

The present disclosure relates to an optical module and a distance measuring device.

BACKGROUND ART

Light detection and ranging (LiDAR) of a time of flight (ToF) method, in which a distance to an object is measured using a time from when an object is irradiated with a laser until scattered light from the object reaches a measuring instrument, is used for various applications such as topographic measurement, structure management, obstacle measurement in automated driving, gesture input, and defect inspection in a production line. There have been various reports on structures of a distance sensor depending on the application, and proposals have been made in consideration of a measurement range, distance accuracy, a repetition frequency, and the use environment (in particular, availability of outdoor use) (see, for example, Patent Document 1 below).

A distance sensor using a micro electro mechanical systems (MEMS) mirror for laser scanning has a high scanning speed, and can improve a point group density. In a coaxial optical system in which laser emission and scattered light from an object pass through the same MEMS mirror, optical paths of emission and transmission/reception are branched using a deflection beam splitter or the like. Therefore, an incident angle of the scattered light on the light receiving element is constant regardless of the laser emission direction, and a single light receiving element can be used.

In such a coaxial optical system, a part of stray light generated by scattering laser light by the deflection beam splitter, the MEMS mirror, a window, or the like enters the light receiving element to generate an erroneous signal. In a case where the object is at a middle distance, it is difficult to perform separation because a signal due to scattered light from the object is close to the intensity and measurement timing of the erroneous signal.

In a biaxial optical system having different optical paths for laser emission and reception, an erroneous signal due to stray light can be suppressed. For example, a method of using different MEMS mirrors for laser emission and reception has been proposed (see, for example, Patent Document 1 below). Further relevant prior art can be found in JP2010217782 A.

CITATION LIST

PATENT DOCUMENT

Patent Document 1: Japanese Patent Application Laid-Open No. 2005-148459

SUMMARY OF THE INVENTION

PROBLEMS TO BE SOLVED BY THE INVENTION

In such a system using different MEMS mirrors, vibration frequencies and swing angles in the mirrors are required to be synchronized with each other, and there is a problem that the system becomes complicated or the accuracy deteriorates due to deviation in the synchronization.

SOLUTIONS TO PROBLEMS

The invention is defined by the appended claims.

BRIEF DESCRIPTION OF DRAWINGS

Fig. 1 is a diagram showing a configuration example of a distance sensor system according to one embodiment of the present disclosure.
Fig. 2 is a schematic diagram showing an example of an optical module according to the one embodiment of the present disclosure.
Fig. 3 is a diagram showing an example of light beam simulation of the optical module according to the one embodiment of the present disclosure.
Figs. 4A to 4E show the optical module according to the one embodiment of the present disclosure.

Fig. 5 is a front view of a MEMS device according to the embodiment of the present disclosure.

Fig. 6 is a perspective view (front side) of the MEMS device according to the embodiment of the present disclosure.

Fig. 7 is a perspective view (back side) of the MEMS device according to the embodiment of the present disclosure.

Fig. 8 is a diagram showing an example of simulation (high frequency) of the MEMS device according to the embodiment of the present disclosure.

Fig. 9 is a diagram showing an example of simulation (low frequency) of the MEMS device according to the embodiment of the present disclosure.

Fig. 10 is an optical module according to a modified example of the present disclosure.

Fig. 11 is an optical module according to a modified example of the present disclosure.

Fig. 12 is an optical module according to a modified example of the present disclosure.

Fig. 13 is an optical module according to a modified example of the present disclosure.

Fig. 14 is an optical module according to a modified example of the present disclosure.

Fig. 15 is a diagram showing an application example of the present disclosure.

Fig. 16 is a diagram showing an application example of the present disclosure.

Fig. 17 is a diagram showing an application example of the present disclosure.

MODE FOR CARRYING OUT THE INVENTION

Hereinafter, embodiments and the like of the present disclosure are described below with reference to the drawings. Note that the description is given in the following order.

<1. One embodiment>

<2. Modified examples>

<3. Application example>

The following description is a preferred specific example of the present disclosure, and the content of the present disclosure is limited to the embodiments defined in the appended claim set.

Note that, unless otherwise specified, the description of dimensions, materials, shapes, relative arrangements, and directions such as top, bottom, left, and right of constituent members described in the embodiments are given as an example and not as a limitation of the scope of the present disclosure. Note that the sizes, the positional relationships of the members, and the like in each of the drawings may be exaggerated for clarity of description, and furthermore, there is a case where only a part of reference numerals is illustrated in order to prevent the illustration from becoming complicated.

<Technology related to the present disclosure>

First, in order to facilitate understanding of the present disclosure, a technology related to the present disclosure is described.

The ToF method is classified into two types, which are: an indirect-ToF (i-ToF) method of measuring a distance from phase information of scattered light using an intensity-modulated light source; and a direct-ToF (d-ToF) method of directly measuring a distance from a light receiving time using a pulsed light source. The d-ToF method is classified into three types, which are a linear-mode (LM), a Geiger-mode (GM), and a single-photon (SP). In the LM, a photodiode (PD) or an avalanche photodiode (APD) is used as a light receiving element, and the number of received photons is proportional to an output signal intensity. While the multiplication factor of the PD is 1, the APD can obtain the multiplication factor of about 100.

In the LM, the rise of a pulse output signal is detected at a threshold higher than an optical noise level such as sunlight or an electrical noise of the system, and time measurement using a time to digital converter (TDC) is performed. Therefore, the minimum detectable number of photons in the case of using the APD is about 1000. Therefore, a light source with high pulse energy is required for measuring a medium to long distance, and an eye-safe band wavelength is often used from the viewpoint of laser safety. In addition, a light source having large pulse energy has a large power consumption, and the use thereof is limited. The standard deviation of the measurement distance is mainly caused by the jitter of the light source, the jitter of the light receiving element, and the jitter of the TDC. However, because the number of photons received by the LM is large, the influence of the jitter of the light source and the jitter of the light receiving element is small due to the averaging action. On the other hand, the jitter of the TDC is not affected by the number of received photons, and thus affects the distance accuracy of the LM. In the LM, because the distance measurement can be performed with a single shot and simple calculation, latency is small and real-time detection is possible.

The GM is a method of calculating the light receiving time using a histogram obtained from photon counting. As the light receiving element, a light receiving element using a single photon avalanche diode (SPAD) or the like is used. The SPAD is an APD driven at a breakdown voltage or more, and a multiplication factor of $10^5$ to $10^6$ is obtained. In order to stop the SPAD in which the avalanche breakdown has occurred, a quenching resistor and a metal oxide semiconductor (MOS) are incorporated. Due to charges generated by the avalanche breakdown, the applied voltage becomes equal to or less than the breakdown voltage, and the avalanche breakdown is stopped. Therefore, even if a plurality of photons is simultaneously incident on one SPAD, the output level does not change. In a case where dark count occurs or when the SPAD operates due to the optical noise such as sunlight, new measurement cannot be performed until the avalanche breakdown is stopped and recharging is performed. By using an array element including a plurality of SPADs, the ratio of the non-measurement time due to these noises can be reduced. In a time correlated single photon counting (TCSPC) method, the light receiving time is measured by the TDC of the counting method prepared in each SPAD. Because these noises are the base level of the histogram, the noises can be removed if a sufficient S/N is obtained. Furthermore, in a coincidence detection of time correlated single photon counting (CDTCSPC) method, the light receiving time is measured by the TDC of the counting method prepared in each SPAD using the array element including at least two SPADs. By setting a case where only output signals of two or more SPADs are obtained within a set time gate to true, a case where dark count occurs and an influence of the optical noise such as sunlight can be excluded. In any method, in order to calculate an expected value of the light receiving time from the histogram of the light receiving times obtained from the plurality of shots, for example, dozen to several tens of shots are performed for each frame. In the GM, the jitter of the light source and the jitter of the light receiving element are averaged by the cumulative number of photons contributing to the valid count in the histogram processing, and the jitter of the TDC is averaged by the valid count in the histogram processing. Therefore, the jitter of each device may be relatively large. It is known that time-walk occurs in a case where the plurality of photons is incident on the SPAD. Because the number of photons incident on the SPAD follows the Poisson distribution, it is extremely difficult to obtain information on the number of incident photons in detail. Therefore, the distance accuracy of the GM is limited by the time-walk, and is limited to about centimeters. Because the GM requires the plurality of shots and the histogram processing for each frame, latency is large.

The SP is a method of acquiring the light receiving time by a single shot by detecting the rise of a signal based on single-photon detection. As the light receiving element, a silicon photomultiplier (SiPM), a multichannel photomultiplier (MCP), a photomultiplier (PMT), or the like is used. In both cases, a multiplication factor of $10^5$ to $10^6$ is obtained, single-photon detection and multi-photon detection are possible, and the number of received photons is proportional to the output signal intensity. Due to the recent improvement in the performance of the SiPM, the SiPM is often used particularly in a small system. The SiPM includes several hundreds to several thousand cells, each cell is a SPAD, and each SPAD is provided with a quenching resistor. The output of each cell is configured as a parallel circuit connected on the anode side and the cathode side. Because the number of cells is large, even in a case where the plurality of photons is incident on the SiPM, a probability that the plurality of photons is incident on one cell is low, and therefore, the time-walk caused by the avalanche breakdown can be ignored. The ideal SP can measure the distance with the single-photon detection, but at the time of measuring with the single-photon detection, the averaging action cannot be obtained for the jitter of the light source, the jitter of the light receiving element, and the jitter of the TDC, which are main factors of the standard deviation of the measurement distance. In a case of being compared to the LM, because the pulse energy of the light source required for the SP is approximately proportional to the multiplication factor of the light receiving element, the power consumption of the light source can be greatly reduced. In addition, in a case of being compared to the GM, the pulse energy is proportional to the number of shots, and thus is about one order of magnitude lower. In the SP, because the distance measurement can be performed with a single shot and simple calculation, latency is small and real-time detection is possible. However, it is difficult to reduce the noise lower than the signal level by the single-photon detection, and there are often cases where the actual SP targets several photons. In any case, the light source, the light receiving element, and the TDC with a small jitter are required in order to utilize the characteristics of the SP, and have been used only for limited applications such as a topographic measuring instrument mounted on an artificial satellite.

The jitter of the light source is caused by the pulse width of the pulsed light and the jitter of a drive circuit. In the case of performing the measurement distance accuracy, the influence of the jitter caused by the drive circuit of the light source can be removed by generating the electric signal from the pulsed light without having the electric signal transmitted from a control unit to a start signal input to the TDC. The pulse width of the pulsed light is desirably hundred picoseconds or less, and further, with the pulse width of several picoseconds to several tens of picoseconds, the distance accuracy is greatly improved. The pulse energy is desirably several hundred picojoules to several nanojoules.

In the SiPM used in the light receiving element, electric crosstalk and optical crosstalk are reduced by a guide ring or a trench structure. Although the avalanche breakdown can be converged by the quenching resistance of several tens of kilo-ohms provided in each cell, the recharge time is lengthened due to the CR time constant of the SiPM. Because the charges generated by the avalanche amplification are output via the quenching resistor and the parasitic capacitance, the pulse received by the SiPM has a steep rising characteristic. In a case where the quenching resistor and the parasitic capacitance are connected to the same electrode, the SiPM is connected to a transimpedance amplifier or an operational amplifier with a read resistor via a capacitor cut-off filter. In addition, in a case where the quenching resistor and the parasitic capacitance are connected to different electrodes, the output of the latter is connected to a transimpedance amplifier or an operational amplifier with a read resistor. With these arrangements, the tail of the output waveform caused by the CR time constant of the SiPM is removed, and the measurement rate can be increased. In a case where the SiPM is used for the SP, it is important to reduce the jitter. The jitter in the read path is dominated by a decrease in the S/N due to mixing of a common mode noise into a signal line and the S/N of a first-stage amplifier. In particular, in a small SP, it is difficult to remove noise generated from a pulsed light source drive circuit, a DC-DC converter, and the like, and the common mode noise increases. Because the connection between the SiPM and the amplifier described above is a single-ended input, a phase difference occurs between the common mode noise mixed in the signal line and the common mode noise occurring via the ground of the amplifier. Therefore, a high-frequency component of the common mode noise cannot be removed. In a case where the SP is used at a short distance, it is necessary to prevent erroneous detection due to stray light. In the SiPM, electrons or holes trapped in semiconductor defects or the like are emitted in the avalanche amplification process, and after pulses that cause avalanche amplification again are randomly generated. Because the after pulse also occurs during the measurement period, the after pulse cannot be separated from the signal in the subsequent stage.

In the SP, a coaxial optical system is often used. In a large SP, measurement light emitted from the light source in a radial direction and detection light scattered from the object are branched using a perforated mirror or the like. On the other hand, in a small SP, because the perforated mirror or the like cannot be used, a polarizing light beam splitter including a dielectric multilayer film is used. However, the scattering coefficient of the polarizing light beam splitter is as high as about $10^{-4}$, which causes generation of a large amount of stray light.

Incidentally, with the spread of artificial intelligence (AI) and the fifth Generation (5G) mobile communication, an interaction technology that captures dynamic activities of people in real time has been required. For example, the technology can be used in: a natural user interface (UI) to capture a slight movement of a person from a distance that does not disturb a moving route of the person; a UI for sports to accurately capture a position of even a strenuous movement and utilize the movement for coaching or technical determination; a medical endoscope to accurately capture a position and vibration of an internal organ or the like; and ambient intelligence to capture a slight movement of a person from a position such as a street lamp that does not disturb a movement route of the person and utilize the movement as data for security or smart city. In such applications, distance measurement from a short distance of dozen centimeters to a middle distance of several tens of meters is required, and high field of view (FOV), low latency, and external light resistance are required. These characteristics can also be used for real-time distance measurement in automatic driving of an automobile at a crowded intersection or a narrow road in a residential area or a downtown, drone collision prevention, three-dimensional measurement of a structure using a drone, and the like.

In such new applications of distance measurement, miniaturization, low power consumption, real-time detection, distance range, and distance accuracy are required. Although the SP is suitable for these requirements in principle, improvement of the light source, the light receiving element, and optical components is required as described above.

The present disclosure made in view of such points is described in detail below.

<1. One embodiment>

[Configuration example of distance sensor system]

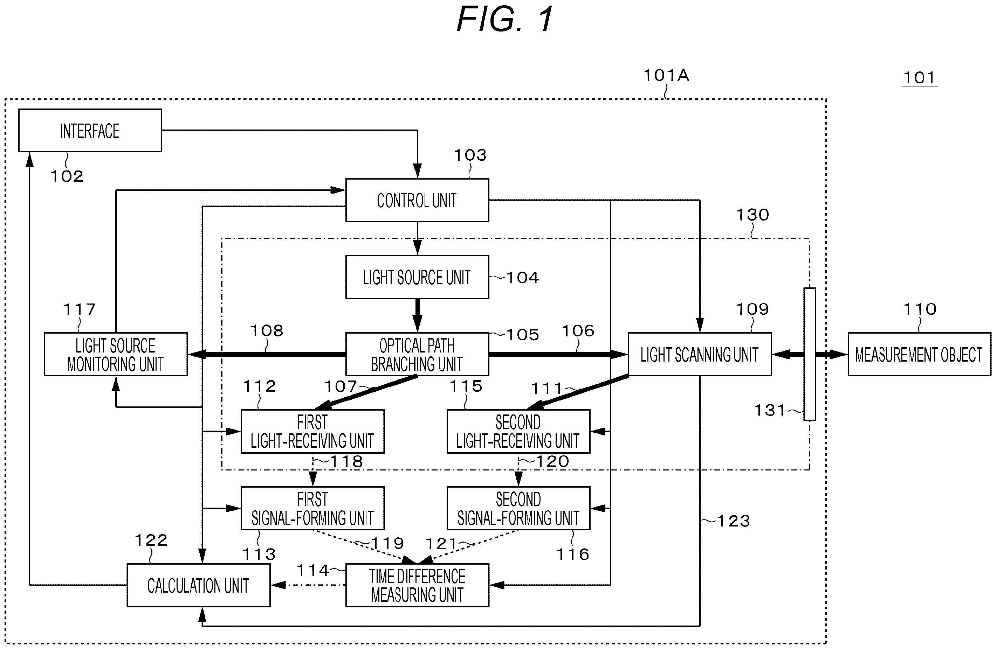

Fig. 1 is a diagram showing a configuration example of a distance sensor system (distance sensor system 101) according to an embodiment. A solid arrow in Fig. 1 indicates a control signal, a thick arrow indicates an optical path, a broken arrow indicates a signal line, and a dashed-dotted arrow indicates a data line. The distance sensor system 101 includes a distance measuring device 101A and a measurement object 110. The distance measuring device 101A includes an interface 102, a control unit 103, a light source unit 104, an optical path branching unit 105, a light scanning unit 109, a first light-receiving unit 112, a first signal-forming unit 113, a time difference measuring unit 114, a second light-receiving unit 115, a second signal-forming unit 116, a light source monitoring unit 117, and a calculation unit 122.

The interface 102 is an interface used when the distance measuring device 101A and an external device exchange data and commands with each other. The control unit 103 controls the entire distance measuring device 101A. The operation of each unit of the distance measuring device 101A is controlled by the control unit 103.

The control unit 103 that has received the control parameter from the outside via the interface 102 transmits a control signal to a plurality of devices and circuits described later. The light source unit 104 includes a Q-switched semiconductor light-emitting element and a drive circuit, has a pulse width of sub-nanoseconds, preferably 20 picoseconds or less, and emits pulsed light with high beam quality having pulse energy of several hundred picojoules to several nanojoules.

In the optical path branching unit 105, light from the light source unit 104 is branched into measurement light 106 emitted to the measurement object 110 via a beam splitter or the like, reference light 107 for obtaining a start signal of time measurement, and control light 108 for controlling the light source. The measurement light 106 is transmitted to the light scanning unit 109, and is sequentially applied to a designed field of view (FOV) range. The measurement light 106 emitted to the measurement object 110 such as a person is scattered. A part of the scattered light passes through the light scanning unit 109 and becomes detection light 111.

The reference light 107 is transmitted to the first light-receiving unit 112 and converted into a reference electric signal 118 by a light receiving element such as the PD, the APD, or the SiPM. The reference electric signal 118 is transmitted to the time difference measuring unit 114 via the first signal-forming unit 113. The detection light 111 is transmitted to the second light-receiving unit 115 and converted into a detection electric signal 120 by a light receiving element such as the SiPM. The detection electric signal 120 is transmitted to the time difference measuring unit 114 via the second signal-forming unit 116. As described later, the second signal-forming unit 116 amplifies a very weak detection electric signal 120 by single photon detection with high S/N and low jitter.

The first signal-forming unit 113 amplifies the reference electric signal 118 that is an analog waveform output from the light receiving element, and generates the reference rectangular wave 119 on the basis of a detection threshold that is optionally set. The second signal-forming unit 116 amplifies the detection electric signal 120 that is an analog waveform output from the light receiving element, and generates the detection rectangular wave 121 on the basis of a detection threshold that is optionally set. The control light 108 is transmitted to the light source monitoring unit 117, measures pulse energy and a pulse width, and returns information to the control unit 103. The number of rectangular waves transmitted to the time difference measuring unit 114 may be one or two or more, and these may be different rectangular waves obtained with two or more detection thresholds. The time difference measuring unit 114 uses the TDC to measure the relative time of the input rectangular wave. This is a time difference between the reference rectangular wave 119 and the detection rectangular wave 121, or a time difference between a separately prepared clock and the reference rectangular wave or between the clock and the detection rectangular wave. These differ depending on the type of the TDC. The methods adopted by the TDC includes a single counter method, a method of calculating an average value by performing measurement a plurality of times using the counter method and an inverter-based ring-delay-line, and a method of combining the counter method with a highly accurate measurement method having a picosecond resolution such as vernier buffering or pulse shrink buffering. In addition, the time difference measuring unit 114 may have a function of measuring a rise time of the detection electric signal 120 output from the second light-receiving unit 115, measuring a peak value, or measuring a pulse integral value. These values can be measured by the TDC or an analog to digital converter (ADC).

The time difference measured by the time difference measuring unit 114 is sent to the calculation unit 122. The calculation unit 122 performs offset adjustment, performs time-walk error correction using a rise, a peak value, a pulse integral value, and the like of the detection electric signal 120, and performs temperature correction. Then, the calculation unit 122 performs vector calculation using scanning timing information 123 transmitted from the light scanning unit 109. Note that distance data and scanning angle data may be output from the interface 102 without having the vector operation performed. Furthermore, appropriate processing such as noise removal, averaging with adjacent points, and interpolation may be performed on these pieces of data, or advanced algorithms such as recognition processing may be performed thereon.

The distance measurement in LiDAR has been described by using an example of using the method of measuring the time difference between the emitted light of the laser and the scattered light from the measurement object. However, a distance may be obtained using a light receiver by receiving interference light between the emitted light of the laser and the scattered light from the measurement object. In this case, more precise distance measurement can be performed.

As described above, the ideal SP can measure the distance with the single-photon detection, but at the time of measuring with the single-photon detection, the averaging action cannot be obtained for the jitter of the light source, the jitter of the light receiving element, and the jitter of the TDC, which are main factors of the standard deviation of the measurement distance. Further, at the time of multi-photon detection with several photons to several tens of photons, a slight averaging action according to the number of photons can be obtained for the jitter of the light source and the jitter of the light receiving element, but an averaging action cannot be obtained for the jitter of the TDC. Even with the high-accuracy TDC having a fine structure by a complementary metal oxide semiconductor (CMOS) technology, because the area occupied by the high-accuracy TDC is several square nanometers to several tens of square nanometers, it is difficult to achieve a two-dimensional array and also downsizing and high density. However, it is possible to achieve downsizing and high density in a single body or a one-dimensional array. Therefore, the jitter can be reduced to several picoseconds by using the high-accuracy TDC.

The optical component is incorporated in an optical module 130. Here, the expected value of the number of received photons is expressed by the following Formula (1).

(Formula 1)

$$<N_S> = N_T \cdot \rho_{target} \cdot \frac{A_{rec}}{\pi R^2} \cdot \eta_{sys} = N_T \cdot p$$

Here, $<N_S>$ is an expected value of the number of received photons, $N_T$ is the number of emitted photons, $\rho_{target}$ is a scattering coefficient of an object, $A_{rec}$ is a receiving aperture size, R is a distance to the object, $\eta_{sys}$ is optical efficiency of a reception system, and p is cumulative efficiency.

In the case of the coaxial optical system, by the laser light being slightly scattered by the optical path branching unit 105, the light scanning unit 109, a window 131, and the like in the optical path where the laser light is emitted from the window 131 before the stray light is received, an erroneous signal is generated. The expected value of the number of received photons of the erroneous signal is expressed by the following Formula (2).

(Formula 2)

$$<N_E> = N_T \cdot \rho_E \cdot \frac{A_{sys}}{\pi f^2} \cdot \eta_E = N_T \cdot p_E$$

Here, $<N_E>$ is an expected value of the number of photons of the erroneous signal, $N_T$ is the number of emitted photons, $\rho_E$ is an accumulated value of scattering coefficients of the optical path, $A_{sys}$ is an effective size of a condensing lens, f is a focal length of the condensing lens, $\eta_E$ is optical efficiency from the position where the erroneous signal is generated to the light receiving element, and $p_E$ is cumulative efficiency. $\rho_E$ is about $10^{-4}$ in the case of a dielectric film, about $10^{-5}$ in the case of a gold film, and about $10^{-2}$ in the case of specular reflection on the window.

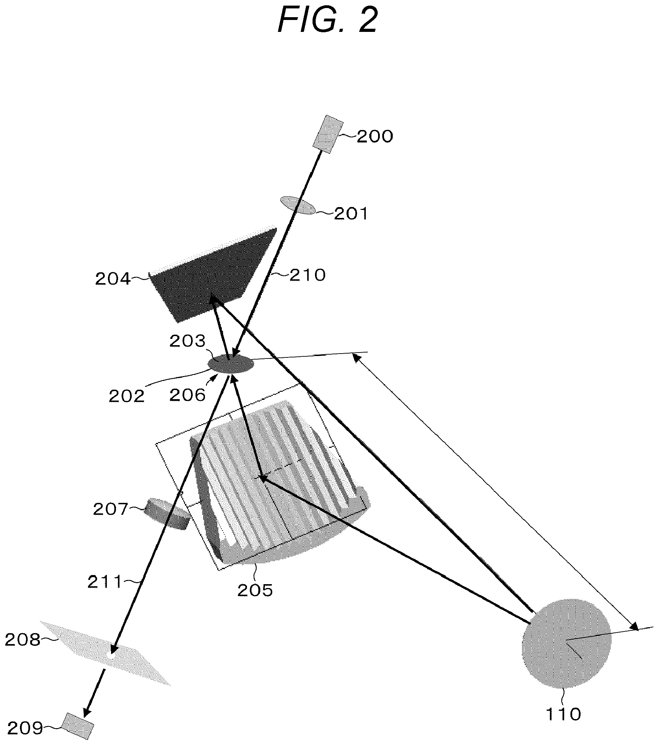

When the measurement distance is 10 m or more, p and $p_E$ are at around the same level, and an erroneous signal cannot be ignored. In the present exemplary embodiment, a double-sided mirror, more specifically, a double-sided MEMS mirror is used as the light scanning unit 109, and the arrangement in Fig. 2 is employed to suppress generation of an erroneous signal.

(Optical module)

Next, an example of the optical module 130 is described with reference to Figs. 2 to 4. In Fig. 2, a reference numeral 110 denotes a measurement object, a reference numeral 200 denotes a semiconductor laser, a reference numeral 201 denotes a collimating lens, a reference numeral 202 denotes a double-sided mirror, a reference numeral 203 denotes a back surface of the double-sided mirror, a reference numeral 204 denotes a plane mirror, a reference numeral 205 denotes a uniaxial retroreflective mirror, a reference numeral 206 denotes a front surface of the double-sided mirror 202, a reference numeral 207 denotes a lens, a reference numeral 208 denotes an aperture surface, and a reference numeral 209 denotes a light receiving element. Furthermore, a reference numeral 210 denotes an emission optical axis, and a reference numeral 211 denotes a reception optical axis. For example, the semiconductor laser 200 corresponds to the light source unit 104, and the double-sided mirror 202 corresponds to the light scanning unit 202. In addition, the light receiving element 209 corresponds to the first light-receiving unit 112 and the second light-receiving unit 113, and the other configuration corresponds to the optical path branching unit 105.

The double-sided mirror 202 is a mirror that rotates or performs pendulum motion about at least one rotation axis. The plane mirror 204 is disposed on the back surface 203 side of the double-sided mirror 202 at an angle of approximately 45 degrees from the horizontal surface. The angle of approximately 45 degrees means an angle of 45 degrees or an angle within an error range that can be equated with 45 degrees. In addition, the uniaxial retroreflective mirror 205 is disposed on the front surface 206 side of the double-sided mirror 202 at an angle of approximately 45 degrees from the horizontal surface. The retroreflective axis of the uniaxial retroreflective mirror 205 is perpendicular to the horizontal surface and the normal line of the uniaxial retroreflective mirror. Here, the horizontal surface means a plane parallel to the mirror plane when the double-sided mirror 202 is stationary.

The uniaxial retroreflective mirror 205 has a mirror pair forming an angle of 90 degrees with each other. More specifically, the uniaxial retroreflective mirror 205 has a mirror pair in which two adjacent plane mirrors are disposed so as to form an angle of approximately 90 degrees with each other. The uniaxial retroreflective mirror 205 is also referred to as a roof mirror array or the like.

The lens 207 having the optical axis center on the horizontal surface passing through the center of the double-sided mirror 202 is disposed on the front surface 206 side of the double-sided mirror 202. The laser emitted from the semiconductor laser 200 passes through the collimating lens 201 and is reflected by the back surface 203 of the double-sided mirror 202. The light is reflected toward the measurement object 110 by the plane mirror 204 forming an angle of +45 degrees with the horizontal surface. The scattered light from the measurement object 110 is reflected by the uniaxial retroreflective mirror 205, reflected by the front surface 206 of the double-sided mirror 202, passes through the condensing lens 207, and is condensed by the aperture surface 208. The light having passed through the aperture surface 208 reaches the light receiving element 209. For example, the focal point of the lens 207 is located in a hole (pinhole) at the center of the aperture surface 208. The light receiving element 209, which is an example of a light receiver, is a semiconductor element, and receives interference light between emitted laser light and scattered light from the measurement object 110. The focal position of the outer periphery of the lens 207 faces the focal position of the center of the lens 207.

In a case where the measurement object 110 is sufficiently separated (4 m or more), the emission optical axis 210 and the reception optical axis 211 are substantially parallel to each other regardless of the angle of the double-sided mirror 202, and the deviation of the condensing position on the aperture surface 208 is small.

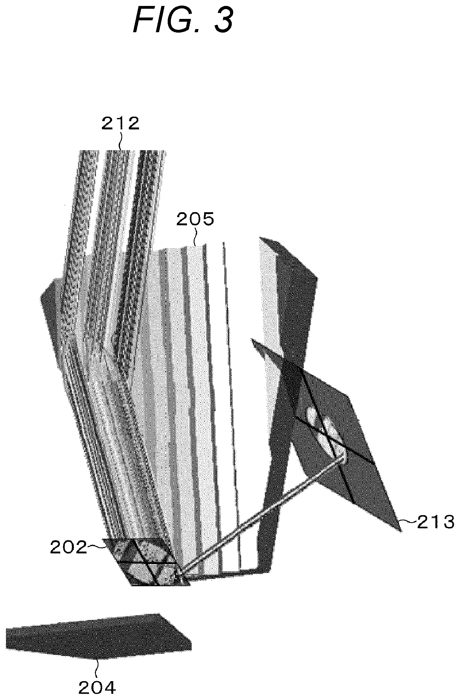

Fig. 3 shows a simulation result of light beam tracing. Only light beams passing through the lens on the plane 213 provided at the condensing lens position are illustrated. Scattered light 212 is a bundle of three light beams, and the surface of the double-sided mirror 202 and the plane 213 at the lens position are also separated into three regions. Because the light beam reflected once by each of the two plane mirrors passes through the lens, the light beam has such a gap formed therein.

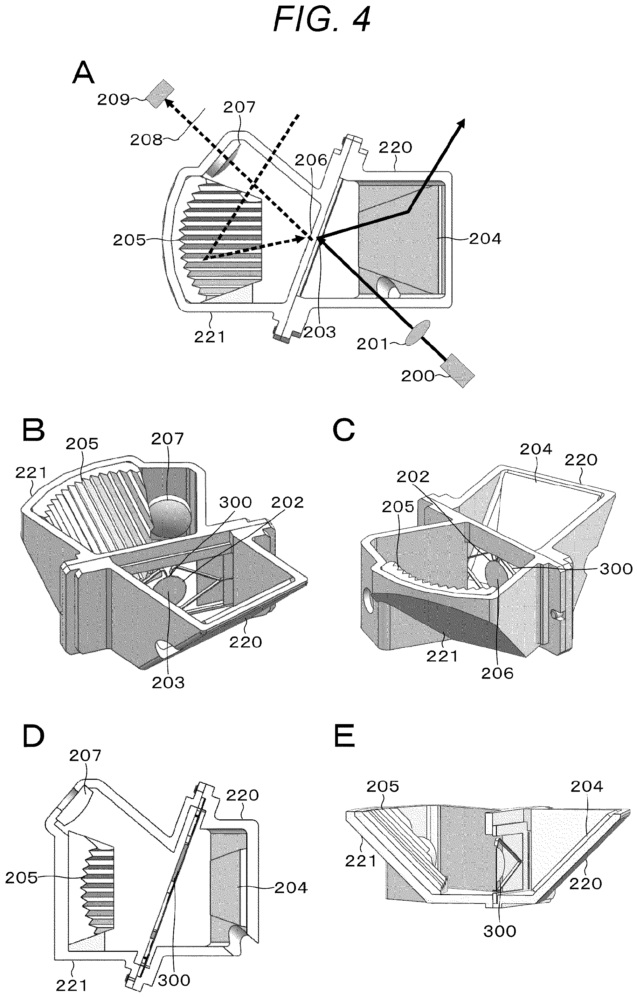

Figs. 4A to 4E are views showing an example of the optical module 130, in which Fig. 4A is a top view, Figs. 4B and 4C are perspective views, Fig. 4D is a horizontal sectional view passing through the center of the double-sided mirror 202, and Fig. 4E is a vertical sectional view passing through the center of the MEMS mirror. Note that the double-sided mirror 202 is also a mirror part 301 constituting a MEMS device 300 described later.

The optical module 130 has a box-shaped casing. As shown in Fig. 4A, the casing has a configuration in which the peripheries of an emission-side casing 220 and a reception-side casing 221 are connected to each other. The MEMS device 300 is provided at a boundary between the emission-side casing 220 and the reception-side casing 221. The emission-side casing 220 and the reception-side casing 221 are spatially connected to each other via a gap included in the MEMS device 300. Note that, although not illustrated, the window 131 is provided on the upper side of Fig. 4A, and light from the laser 200 is emitted through the window 131, or light from the measurement object 110 is incident therethrough.

The collimating lens 201 is disposed outside the casing of the optical module 130. In the emission-side casing 220, the back surface 203 of the double-sided mirror 202 and the plane mirror 204 are disposed to face each other. The plane mirror 204 is provided on an inner surface of a wall of the emission-side casing 220 provided in an inclined manner with respect to the back surface 203.

The uniaxial retroreflective mirror 205, the front surface 206 of the double-sided mirror 202, and the lens 207 are disposed in the reception-side casing 221. The uniaxial retroreflective mirror 205 and the front surface 206 of the double-sided mirror 202 are disposed to face each other, and the lens 207 is disposed at a position adjacent to the uniaxial retroreflective mirror 205. According to the invention, the mirror pair constituting the uniaxial retroreflective mirror 205 has a concave shape when viewed from the double-sided mirror 202 side. Specifically, by the uniaxial retroreflective mirror 205 being provided on the inner surface of the wall of the reception-side casing 221 that protrudes outward and is inclined with respect to the double-sided mirror 202, the mirror pair has a concave shape (curved concave shape) when viewed from the double-sided mirror 202 side.

In the horizontal section of the uniaxial retroreflective mirror 205, the vertex of the mirror pair is generally on a circular arc (not illustrated) virtually drawn around the double-sided mirror 202. With this arrangement, the optical path difference can be minimized in the light beam until the scattered light reaches the light receiving element 209.

(MEMS device)

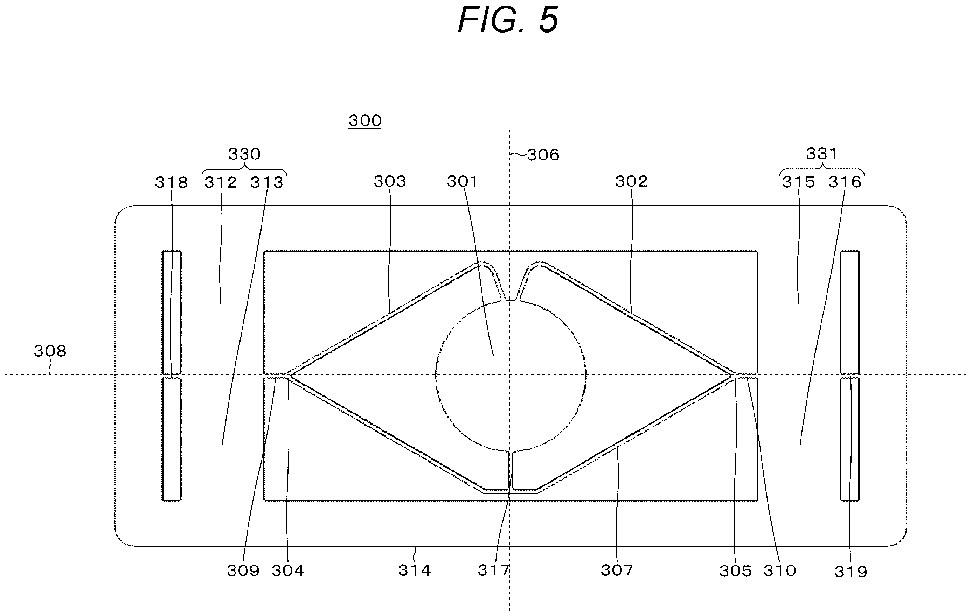

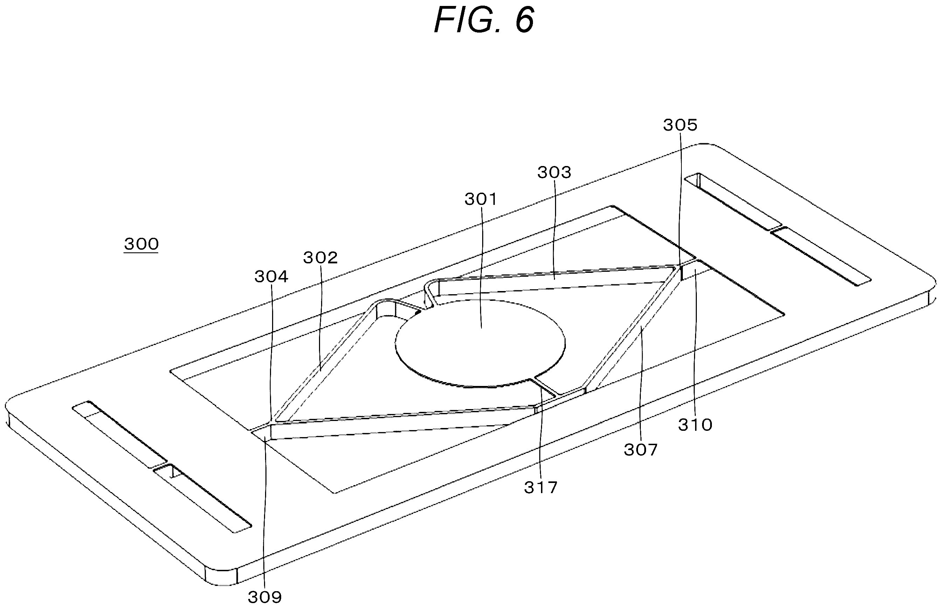

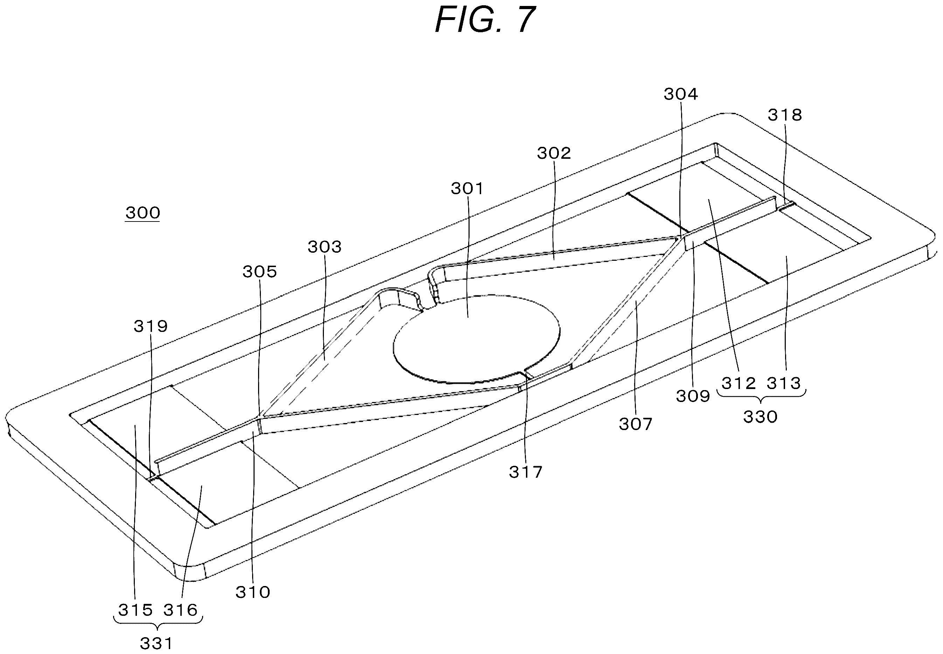

The double-sided mirror 202 described above can be configured as a MEMS mirror in the MEMS device 300. With reference to Figs. 5, 6, and 7, a description is given of the MEMS device 300 according to the embodiment of the present disclosure. Fig. 5 is a front view of the MEMS device 300, Fig. 6 is a perspective view of the front side of the MEMS device 300, and Fig. 7 is a perspective view of the back side of the MEMS device 300.

The MEMS device 300 includes, for example, a rectangular frame 314. A rectangular space is formed near the center of the frame 314, and a circular mirror part 301 (the double-sided mirror 202 described above, and there are cases where the term is simply referred to as a MEMS mirror) is disposed near the center of the space. The mirror part 301 is supported by a first beam 302, a second beam 303, and a third beam 307, which are connected to the mirror part 301.

The first beam 302 and the second beam 303 are disposed symmetrically with respect to a first rotation axis 306 of the mirror part 301. With respect to the first beam 302 and the second beam 303, the third beam 307 is disposed on the opposite side (the facing side on the first rotation axis 306) with respect to a line orthogonal to the first rotation axis 306 and passing through the center of gravity of the mirror part 301. Note that, because the MEMS device 300 according to the present embodiment is a device that performs a two-axis movement, a line that is orthogonal to the first rotation axis 306 and passes through the center of gravity of the mirror part 301 corresponds to a second rotation axis 308. Note that the MEMS device 300 may be a device that performs a one-axis movement.

The first beam 302 extends substantially upward in Fig. 5 so as to be away from the first rotation axis 306 from a position connected to the mirror part 301, and is bent in the middle and extends in a direction away from the first rotation axis 306. Then, the distal end of the first beam 302 is connected to a first joint 304 provided on the second rotation axis 308.

The second beam 303 extends substantially upward in Fig. 5 so as to be away from the first rotation axis 306 from a position connected to the mirror part 301, and is bent in the middle and extends in a direction away from the first rotation axis 306. Then, the distal end of the second beam 303 is connected to a second joint 305 provided on the second rotation axis 308 and on the opposite side to the first joint 304.

The first joint 304 is connected with a fourth beam 309 provided on the second rotation axis 308. Furthermore, the second joint 305 is connected with a fifth beam 310 provided on the second rotation axis 308.

The fourth beam 309 is connected to a first vibration input part 330 that applies torsional vibration to the second rotation axis 308 (see Fig. 7). The first vibration input part 330 includes an upper part 312 of the first vibration input part 330 and a lower part 313 of the first vibration input part 330, which are provided at positions symmetrical with respect to the second rotation axis 308. Each of the upper part 312 and the lower part 313 of the first vibration input part 330 has a piezoelectric element. The fourth beam 309 is connected to each of the upper part 312 of the first vibration input part 330, the lower part 313 of the first vibration input part 330, and the frame 314.

The fifth beam 310 is connected to a second vibration input part 331 that applies torsional vibration to the second rotation axis 308 (see Fig. 7). The second vibration input part 331 includes an upper part 315 of the second vibration input part 331 and a lower part 316 of the second vibration input part 331, which are provided at positions symmetrical with respect to the second rotation axis 308. Each of the upper part 315 and the lower part 316 of the second vibration input part 331 has a piezoelectric element. The fifth beam 310 is connected to each of the upper part 315 of the second vibration input part 331, the lower part 316 of the second vibration input part 331, and the frame 314.

A rib is provided in each of a part of the first beam 302, a part of the second beam 303, a part of the third beam 307, a part of the fourth beam 309, and a part of the fifth beam 310. In each beam shown in Fig. 7, the rib is a portion protruding toward the back surface side of the back surface of the mirror part 301 or the surface of the piezoelectric element included in each vibration input part. Note that, in the example shown in Fig. 7, the beams and the ribs have substantially the same thickness with each other, but may have different thicknesses from each other. The third beam 307 is provided with a sensor 317 for detecting torsion as a first torsion detection part, by lamination or the like. The fourth beam 309 is provided with a sensor 318 for detecting torsion as a second torsion detection part, by lamination or the like. The fifth beam 310 is provided with a sensor 319 for detecting torsion as a third torsion detection part, by lamination or the like.

Note that the shapes of the first vibration input part 330 and the second vibration input part 331 are not limited to the illustrated shapes, and may have a hinge inside or may be divided into a plurality of parts, and the area occupancy is not limited to the illustrated contents.

Next, an example of a result of the simulation is described. The mirror part 301 has a circular shape with a diameter of 4 mm, and the frame 314 has a size of 9 mm in length and 21 mm in width. As base material, silicon is used.

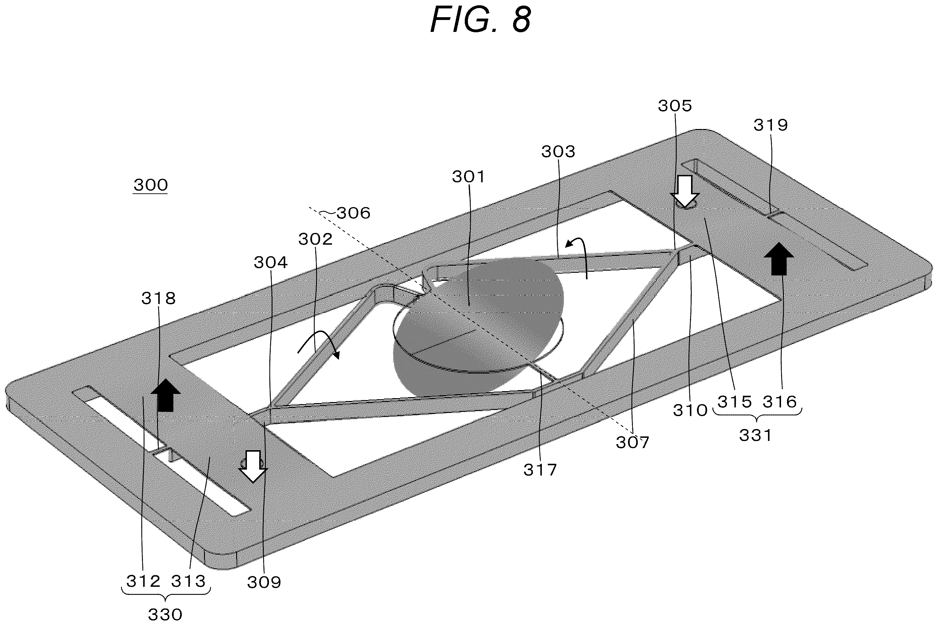

Fig. 8 is a diagram showing a simulation result in a case where, assuming that when the phase of vibration input to the upper part 312 of the first vibration input part 330 is 0 degrees, the phase of vibration input to the lower part 313 of the first vibration input part 330 is 180 degrees, the phase of vibration input to the upper part 315 of the second vibration input part 331 is 180 degrees, and the phase of vibration input to the lower part 316 of the second vibration input part 331 is 0 degrees, and vibration of 4.2 kilohertz is applied to each of the parts. In this manner, reversed-phase vibration is input to each of the first vibration input part 330 and the second vibration input part 331.

It can be seen that torsion occurs at a portion of the first beam 302 where the rib is extending straight from the first joint 304, and this torsion is converted into torsional motion of the mirror part 301 at a location (portion) where the first beam 302 is bent. Similarly, torsion occurs at a portion of the second beam 303 where the rib is extending straight from the second joint 305, and this torsion is converted into torsional motion of the mirror part 301 at a location (portion) where the second beam 303 is bent. It can be seen that, in the third beam 307, torsion is eliminated on the first rotation axis 306 because torsion acting on the opposite directions is applied from each of the first joint 304 and the second joint 305. In this manner, in the configuration of the present embodiment, the torsional motion about the first rotation axis 306 can be generated by the torsion input about the second rotation axis 308 orthogonal to the first rotation axis 306. The resonance frequency can be appropriately set by adjusting width and thickness of the beam, terminal positions of the ribs on the mirror side and the frame side, the presence or absence of connection between the frame and the rib, the interval between the first beam 302 and the second beam 303, and the like.

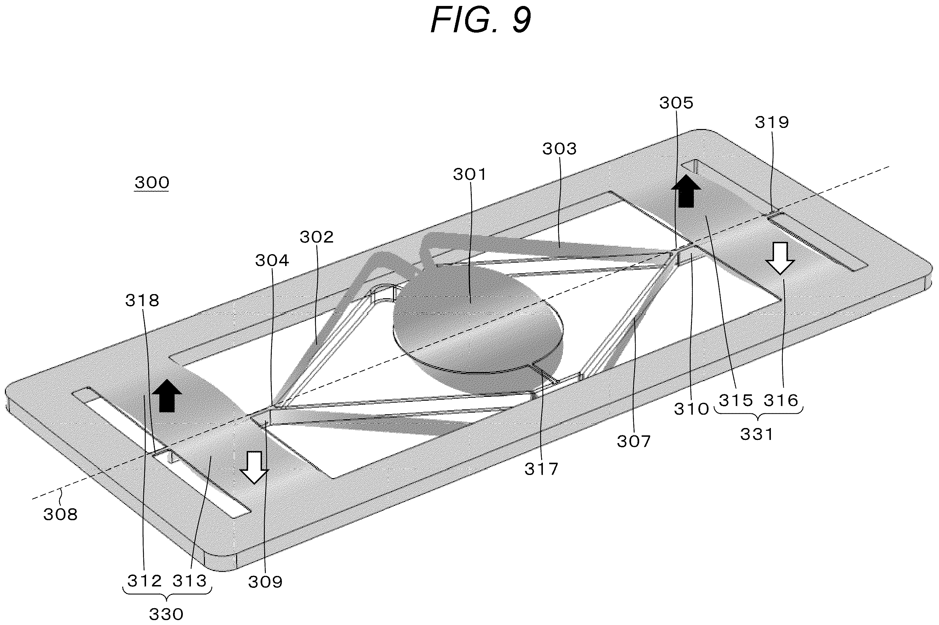

Fig. 9 is a diagram showing a simulation result in a case where, assuming that when the phase of vibration input to the upper part 312 of the first vibration input part 330 is 0 degrees, the phase of vibration input to the lower part 313 of the first vibration input part 330 is 180 degrees, the phase of vibration input to the upper part 315 of the second vibration input part 331 is 0 degrees, and the phase of vibration input to the lower part 316 of the second vibration input part 331 is 180 degrees, and vibration is applied. In this manner, in-phase vibration is input to each of the first vibration input part 330 and the second vibration input part 331. The mirror part 301 torsionally moves about the second rotation axis 308.

As compared with the conventional biaxial scanning MEMS mirror, a dead space can be reduced while a figure of merit is maintained or improved. The torsional vibration around the second rotation axis 308 can be operated in a resonant or non-resonant manner. The torsion detection sensor includes a piezoelectric element or the like, and an applied voltage of the piezoelectric element included in the first vibration input part 330 and the second vibration input part 331 is controlled on the basis of a frequency and intensity of an electric signal obtained from the sensor. Note that the torsion detection sensor 317 of the third beam 307 is not necessarily provided, and high-frequency components of electric signals obtained from the torsion detection sensors 318 and 319 of the fourth beam 309 and the fifth beam 310 may be used instead.

The MEMS device 300 according to the present embodiment can be manufactured using, for example, a silicon on insulator (SOI) substrate. An insulating layer, a lower electrode layer, a piezoelectric element, and an upper electrode layer are formed on a laminated silicon surface. The silicon substrate of the SOI in the region excluding the frame part and the rib part is removed up to the $SiO_2$ layer by selective dry etching, and then the $SiO_2$ layer in the same region is removed. The piezoelectric element and the upper electrode layer in portions other than the vibration input part and the torsion detection part are removed from the surface layer by dry etching, and the lower electrode layer is removed while a piezoelectric element region and a wiring region are left. Thereafter, a wiring metal film of the upper electrode is formed, and a reflective film is formed on the front surface of the mirror part 301. Next, the silicon layer and the $SiO_2$ layer are removed except the necessary portions such as the frame 314, the mirror part 301, the beams 302, 303, 307, 309, and 310, and the vibration input parts 330 and 331. In addition, if necessary, a reflective film is provided on the back surface of the mirror, or a metal film is provided on the back surface of the frame 314. Metal wiring for taking-out may be provided on the frame surface, and furthermore, a metal film may be provided around the metal wiring. The metal films on the front and back sides of the frame 314 can be used for bonding to a support casing. The reflective film on the front surface of the mirror part 301 may be gold, silver, aluminum, or the like covered with a dielectric film, or may be a dielectric multilayer film. In order to suppress warpage of the front surface of the mirror part 301, it is desirable that the front and back reflective films have the same layer configuration. These are examples, and various general methods can be used as the MEMS process in the manufacturing process. The cross section of the rib part may not be rectangular, and may be tapered or inversely tapered. The rib may be laminated on the silicon surface.

The frame 314 may have a structure in which strength can be obtained by being connected to either or both of the emission-side casing 220 and the reception-side casing 221.

Note that the mirror part 301 is not limited to the above-described structure, and may be a MEMS mirror having a different structure as long as the mirror part 301 is a double-sided mirror. In addition, a galvanometer mirror or a mirror using an ultrasonic motor can also be used.

The mirror pair of the uniaxial retroreflective mirror 205 is not limited to the concave shape as shown in Fig. 4, and may be, for example, a flat surface. In a case where the MEMS mirror is shaken to the left and right, a distance difference in the light beam occurs, which causes the distance accuracy to be slightly deteriorated, but on the other hand, the size of the optical module can be reduced.

By using the MEMS device 300 as described above, the vibration frequency and the swing angle can be synchronized.

(Lens)

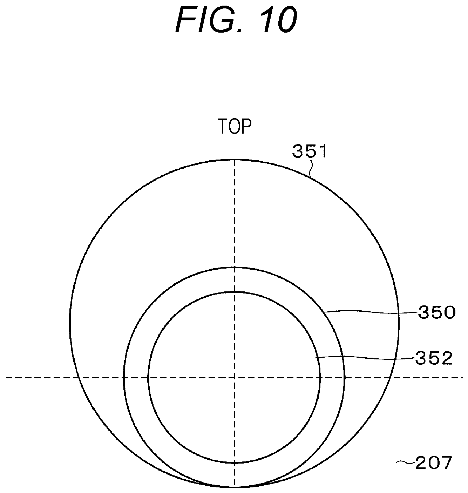

Next, the lens 207 is described. In Fig. 2, when the measurement object 110 approaches, the incident angle on the uniaxial retroreflective mirror 205 becomes an acute angle, and the light beam reflected by the MEMS mirror (double-sided mirror 202) is shifted toward the upper side and the upper left and right sides in Fig. 2 as compared with the case where the measurement object 110 is far away. Moreover, the converging point of the aperture surface 208 is also shifted toward the upper side and the upper left and right sides in Fig. 2. Fig. 10 is an example of the lens 207 that corrects this shift and a light beam incident thereon. For example, a circle 350 includes all the light beams reflected by the double-sided mirror 202 in a case where the measurement object 110 is far away. An outer circle 351 indicates a region through which the light beam passes by scanning of the double-sided mirror 202 in a case where the measurement object 110 is near. In the region of the lens 207 corresponding to the circle 351, a region excluding the circle 350 is different from a region of the circle 350 in the curvature of the lens surface. For example, the curvature becomes gradually sharp toward the outer periphery of the circle 351, and the converging point on the aperture surface 208 expands, and a part of the converging point overlaps with the converging point in a case where the measurement object 110 is located far away. Note that the circle 350 is narrower than the light beam reflected by the double-sided mirror 202 in a case where the measurement object 110 is located far away, and may be a circle 352.

(Second signal-forming unit)

Next, the second signal-forming unit 116 is described in detail. Note that a part of the configuration described below may be the configuration of the second light-receiving unit 115.

The SiPM includes several hundred to several thousand cells, and each cell has an optical response similar to that of the SPAD. Electric crosstalk and optical crosstalk are reduced by a guide ring or a trench structure. Although the avalanche amplification can be converged by the quenching resistance of several tens of kilo-ohms provided in each cell, the recharge time is lengthened due to the CR time constant of the SiPM. Because the charges generated by the avalanche amplification are output via the quenching resistor and the parasitic capacitance, a steep rising characteristic is obtained. In a case where the quenching resistor and the parasitic capacitance are connected to the same electrode, the SiPM is connected to a transimpedance amplifier or an operational amplifier with a read resistor via a capacitor cut-off filter. In addition, in a case where the quenching resistor and the parasitic capacitance are connected to different electrodes, the output of the latter is connected to a transimpedance amplifier or an operational amplifier with a read resistor. With these arrangements, the tail of the output waveform caused by the CR time constant is removed, and the measurement rate can be increased.

In a case where the SiPM is used for the SP, it is important to reduce the jitter. The jitter in the read path is dominated by a decrease in the S/N due to mixing of a common mode noise into the signal line and the S/N of the first-stage amplifier. In particular, in a small SPL, it is difficult to remove noise generated from a pulsed light source drive circuit, a DC-DC converter, and the like, and common mode noise increases. Because the connection between the SiPM and the amplifier described above is a single-ended input, a phase difference occurs between the common mode noise mixed in the signal line and the common mode noise occurring via the ground of the amplifier. Therefore, a high-frequency component of the common mode noise cannot be removed.

In the present embodiment, the common mode noise mixed in the signal line is removed by connecting the SiPM and its replica to the primary side of an isolation balun transformer. The secondary side of the balun transformer is connected to a fully differential amplifier or the like.

The SP using the SiPM for the light receiving element has high light utilization efficiency and excellent low power consumption. Therefore, the combination of the small optical module and the SP in the present embodiment enables new applications that have been difficult in the conventional medium distance lidar such as mobile and wireless.

<2. Modified examples>

Although the embodiment of the present disclosure has been specifically described above, the present disclosure is not limited to the above-described one embodiment, and various modifications based on the technical idea of the present disclosure are possible.

[Modified example 1]

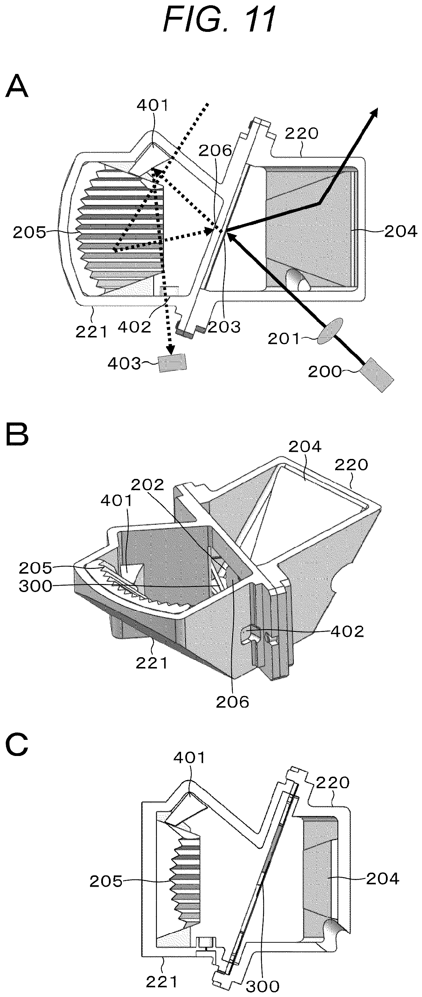

Figs. 11A to 11C are views of an optical module according to the present modified example, in which Fig. 11A is a top view, Fig. 11B is a perspective view, and Fig. 11C is a horizontal sectional view passing through the center of the double-sided mirror 202. Note that, in Fig. 11, members that are the same as or similar to those in the one embodiment are denoted by the same reference numerals or names. The lens 207 (condensing lens) shown in Fig. 4 can be changed to a parabolic mirror 401. At this time, the parabolic mirror 401 having the optical axis center on the horizontal surface passing through the center of the double-sided mirror 202 is disposed on the front surface 206 side of the double-sided mirror 202. With this arrangement, because the optical path to an aperture surface 402 passes through a space between the uniaxial retroreflective mirror 205 and the double-sided mirror 202, the size of the optical module can be reduced. The focal point of the parabolic mirror 401 may be located in a pinhole of the aperture surface 402. The light having passed through the aperture surface 402 reaches a light receiving element 403.

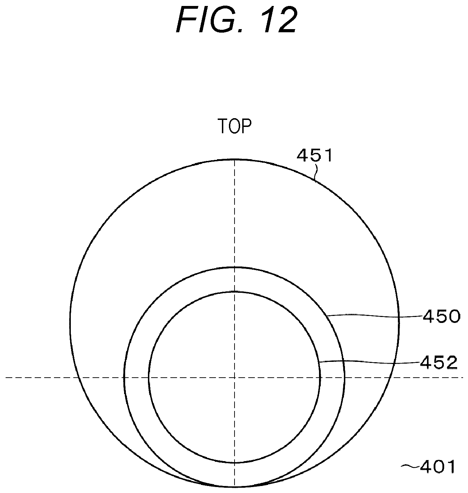

Similarly to the case of Fig. 10, Fig. 12 is an example of the parabolic mirror 401 that corrects the shift. For example, a circle 450 includes all the light beams reflected by the double-sided mirror 202 in a case where the measurement object is far away. An outer circle 451 indicates a region through which the light beam passes by scanning of the double-sided mirror 202 in a case where the measurement object 110 is near. In the region of the parabolic mirror 401 corresponding to the circle 451, a region excluding the circle 450 is different from a region of the circle 450 in the curvature of the mirror surface. For example, the curvature becomes gradually sharp toward the outer periphery of the circle 451, and the converging point on the aperture surface 402 expands, and a part of the converging point overlaps with the converging point in a case where the measurement object 110 is located far away. Note that the circle 450 is narrower than the light beam reflected by the double-sided mirror 202 in a case where the measurement object 110 is located far away, and may be a region indicated by a circle 452.

[Modified example 2]

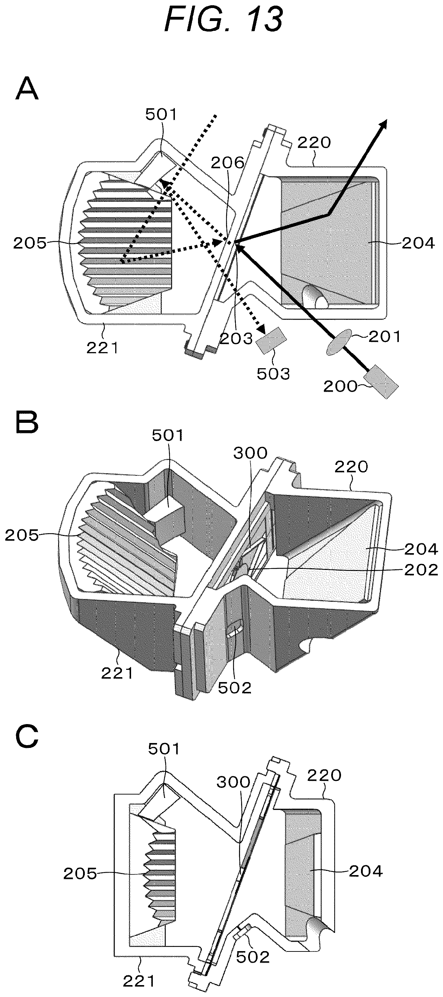

Figs. 13A to 13C are views of an optical module according to the present modified example, in which Fig. 13A is a top view, Fig. 13B is a perspective view, and Fig. 13C is a horizontal sectional view passing through the center of the double-sided mirror 202. Note that, in Fig. 13, members that are the same as or similar to those in the one embodiment are denoted by the same reference numerals or names. The lens 207 (condensing lens) shown in Fig. 4 can be changed to a parabolic mirror 501. At this time, the parabolic mirror 501 having the optical axis center on the horizontal surface passing through the center of the double-sided mirror 202 is disposed on the front surface side of the double-sided mirror 202. With this arrangement, because the optical path to an aperture surface 502 passes through a space of the double-sided mirror 202, the size of the optical module can be reduced. The focal point of the parabolic mirror 501 may be located in a pinhole of the aperture surface 502. The light having passed through the aperture surface 502 reaches a light receiving element 503.

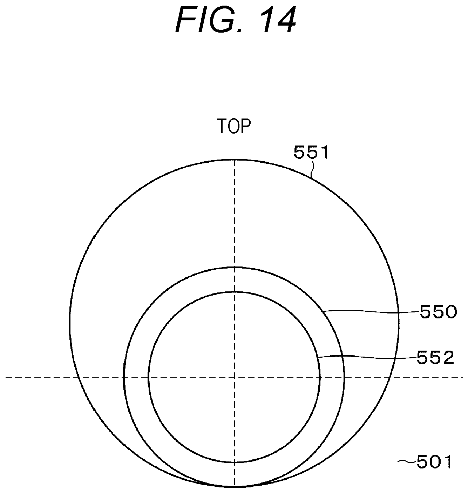

Similarly to the case of Fig. 10, Fig. 14 is an example of the parabolic mirror 501 that corrects the shift. For example, a circle 550 includes all the light beams reflected by the double-sided mirror 202 in a case where the measurement object is far away. An outer circle 551 indicates a region through which the light beam passes by scanning of the double-sided mirror 202 in a case where the measurement object is near. In the region of the parabolic mirror 501 corresponding to the circle 551, a region excluding the circle 550 is different from a region of the circle 550 in the curvature of the mirror surface. For example, the curvature becomes gradually sharp toward the outer periphery of the circle 551, and the converging point on the aperture surface 502 expands, and a part of the converging point overlaps with the converging point in a case where the measurement object is located far away. Note that the circle 550 is narrower than the light beam reflected by the double-sided mirror 202 in a case where the measurement object is located far away, and may be a circle 552.

[Other modified examples]

The uniaxial retroreflective mirror 205 according to the embodiment may have a metasurface. Furthermore, the surface of the metasurface has a concave shape (an overall curved shape) when viewed from the MEMS mirror.

The arrangement position, shape, and the like of each member constituting the optical module 130 can be appropriately changed without departing from the gist of the present disclosure.

The configurations, methods, steps, shapes, materials, numerical values, and the like mentioned in the above-described embodiment and modified examples are merely examples, and different configurations, methods, steps, shapes, materials, numerical values, and the like may be used as necessary, or may be replaced with known ones. Furthermore, the configurations, methods, steps, shapes, materials, numerical values, and the like in the embodiment and the modified examples can be combined with each other as long as no technical contradiction occurs, as defined in the appended set of claims. Note that the contents of the present disclosure are not to be construed as being limited by the effects exemplified in the present description.

<3. Application example>

Next, application examples of the present disclosure are described. The SP described in the one embodiment can highly efficiently measure a distance in a range of dozen centimeters to several tens of meters, and can output distance data with a latency of 1 millisecond or less. Distance accuracy ranges from millimeters to several millimeters, and the following application is possible by utilizing characteristics of low power consumption and small size.

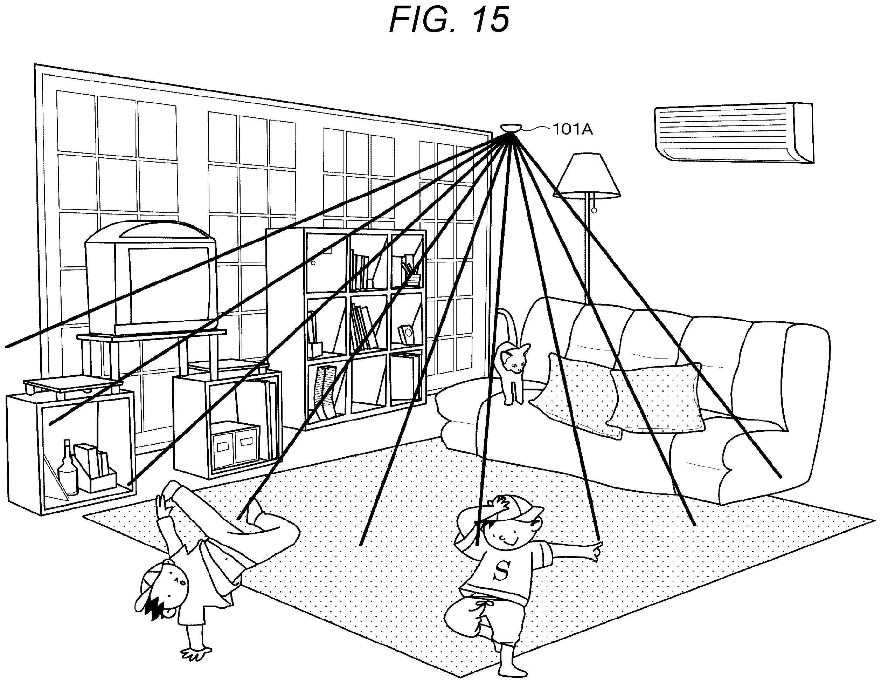

For example, by disposing the distance measuring device 101A in a corner of a room as shown in Fig. 15, the entire room can be measured, and thus, an intense movement in the room or a slight movement such as moving a finger while watching a television on a sofa can be captured. This allows operation of an electronic device such as a home appliance, gaining of an interactive game experience, and utilization in security. Moreover, in the scanning SP, mutual interference between devices is very small, and thus, 3D modeling can be performed in real time by performing distance measurement from two or more directions with a plurality of distance sensor systems, and a more realistic interactive experience can be provided. Because the SP can be used even under sunlight, the experience in Fig. 15 can be expanded and provided in a wider space.

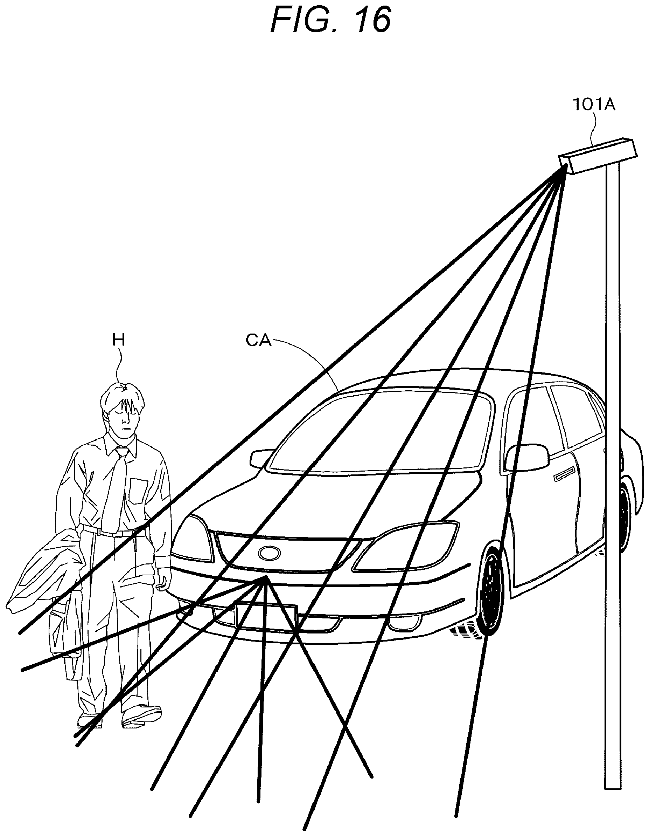

Fig. 16 is a diagram schematically showing an application example assuming a use scene in town centered on people. Because the SP mounted on an automobile CA performs highly accurate distance measurement in real time, even in a case where the distance to a person is short due to being in a narrow place such as an intersection or an alley, even a slight movement can be grasped. With this arrangement, not only the safety of a person H but also the smooth driving of the automobile CA that performs automated driving can be supported. The SP grounded at a utility pole, a street, or the like can grasp a slight movement of the person H or the like passing by without disturbing the moving route of the person. Acquired data is real-time point cloud data, which allows operation in consideration of privacy. For example, the application functions as an interface in a case of operating an information service that predicts the movement of the person H, detecting a crime in advance, and a person intentionally operating a public object. Such movement needs to capture the movement of the finger.

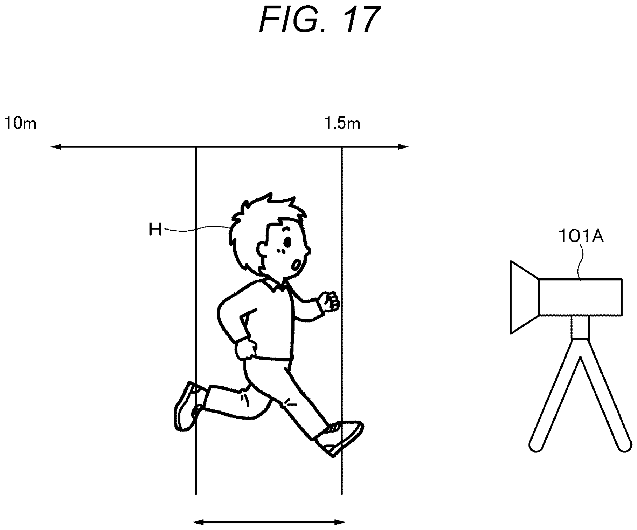

Fig. 17 is a diagram schematically showing an application example related to an imaging technology. Even in a lens having a very shallow focal depth such as a large camera, by the distance measuring device 101A accurately capturing position information of a subject (for example, the person H), the focal length and the focal depth can be calculated and adjustment of the lens can be automatically performed. The present disclosure is not limited to this example, and can be used for various devices that automatically control the distance. For example, the present disclosure can also be applied to machine connection, train coupling, aerial refueling of aircraft, artificial satellite connection, and the like.

In addition, because the distance measuring device 101A in the present disclosure is small and has low power consumption, the device can also be applied to obstacle avoidance of an unmanned airplane such as a drone. There are many severe conditions for the flight of the drone such as the forest and the underground passage, and the SP that can output the point cloud data in real time enables quick and safe flight. The SP is also excellent in asset management of a structure using a drone, in which a point group including mega points or more per second can be acquired in real time, and moreover, inspection of many structures can be performed in one flight because of its low power consumption.

The real-time SP is compatible with sports. In judgement in sports, coaching, and the like, a point cloud of mega points or more per second captures fine movements, and real-time interactive experience digitizes sports movements that have been sensational. For example, a degree of understanding is increased by a person wearing a wearable device such as a piezoelectric element that can provide bodily sensation and the information obtained by the SP being transmitted to the person in real time.

REFERENCE SIGNS LIST

| | |
|---|---|
| 101A | Distance measuring device |
| 202 | Double-sided mirror |
| 203 | Back surface of double-sided mirror |
| 204 | Plane mirror |
| 205 | Uniaxial retroreflective mirror |
| 206 | Front surface of double-sided mirror |
| 207 | Lens |
| 300 | MEMS device |
| 301 | Mirror part |
| 401, 501 | Parabolic mirror |

**Claims**

1. An optical module (130) comprising:

a double-sided mirror (202) that rotates or undergoes pendulum motion about at least one rotation axis;
a plane mirror (204) disposed at an angle of 45 degrees from a horizontal surface on a back surface side (203) of the double-sided mirror; and
a uniaxial retroreflective mirror (205) disposed at an angle of 45 degrees from the horizontal surface on a front surface side (206) of the double-sided mirror, wherein the uniaxial retroreflective mirror has a mirror pair forming an angle of 90 degrees with each other, wherein the mirror pair is a roof mirror array and is disposed in a curved concave shape when viewed from the double-sided mirror,
wherein the optical module includes an axis of retroreflection that is perpendicular to the horizontal surface and a normal line of the uniaxial retroreflective mirror.

2. The optical module according to claim 1, wherein the double-sided mirror has a lens (207) disposed on a front surface side, the lens having an optical axis center on a horizontal surface passing through a center of the double-sided mirror.

3. The optical module according to claim 2, wherein the lens has a focal point located in a pinhole.

4. The optical module according to claim 1, wherein the double-sided mirror has a parabolic mirror disposed on a front surface side, the parabolic mirror having an optical axis center on a horizontal surface passing through a center of the double-sided mirror.

**5.** The optical module according to claim 4, wherein the parabolic mirror has a focal point located in a pinhole.

**6.** The optical module according to claim 1, wherein the uniaxial retroreflective mirror includes a metasurface.

**7.** The optical module according to claim 6, wherein the metasurface has a concave shape when viewed from the double-sided mirror.

**8.** The optical module according to claim 1, wherein the double-sided mirror includes a micro electro mechanical systems, MEMS (300), device.

**9.** A distance measuring device (101A) comprising the optical module according to claim 1, and being configured to:

cause laser light to be incident on a front surface side of the double-sided mirror;
irradiate an object with the laser light through the plane mirror;
reflect scattered light from the object by the uniaxial retroreflective mirror; and
reflect the light reflected by the uniaxial retroreflective mirror on the back surface side of the double-sided mirror and then detect the light by a light receiver.

**10.** The distance measuring device according to claim 9, wherein the light receiver includes a semiconductor element.

**11.** The distance measuring device according to claim 9, wherein the light receiver receives interference light between emitted laser light and the scattered light.


**Patentansprüche**

**1.** Optisches Modul (130), umfassend:

einen doppelseitigen Spiegel (202), der sich um mindestens eine Rotationsachse dreht oder eine Pendelbewegung um diese ausführt;
einen Planspiegel (204), der in einem Winkel von 45 Grad zu einer horizontalen Oberfläche auf einer Rückoberflächenseite (203) des doppelseitigen Spiegels angeordnet ist; und
einen einachsigen retroreflektierenden Spiegel (205), der in einem Winkel von 45 Grad zu der horizontalen Oberfläche auf einer Vorderoberflächenseite (206) des doppelseitigen Spiegels angeordnet ist, wobei der einachsige retroreflektierende Spiegel ein Spiegelpaar aufweist, das einen Winkel von 90 Grad zueinander bildet, wobei das Spiegelpaar eine Dachspiegelanordnung ist und von dem doppelseitigen Spiegel aus betrachtet in einer gekrümmten konkaven Form angeordnet ist,
wobei das optische Modul eine Retroreflexionsachse einschließt, die senkrecht zu der horizontalen Oberfläche und einer Normallinie des einachsigen retroreflektierenden Spiegels verläuft.

**2.** Optisches Modul nach Anspruch 1, wobei der doppelseitige Spiegel eine Linse (207) aufweist, die auf einer Vorderoberflächenseite angeordnet ist, wobei die Linse eine optische Achsenmitte auf einer horizontalen Oberfläche aufweist, die durch eine Mitte des doppelseitigen Spiegels verläuft.

**3.** Optisches Modul nach Anspruch 2, wobei die Linse einen Brennpunkt aufweist, der sich in einer Lochblende befindet.

**4.** Optisches Modul nach Anspruch 1, wobei der doppelseitige Spiegel einen Parabolspiegel aufweist, der auf einer Vorderoberflächenseite angeordnet ist, wobei der Parabolspiegel eine optische Achsenmitte auf einer horizontalen Oberfläche aufweist, die durch eine Mitte des doppelseitigen Spiegels verläuft.

**5.** Optisches Modul nach Anspruch 4, wobei der Parabolspiegel einen Brennpunkt aufweist, der sich in einer Lochblende befindet.

**6.** Optisches Modul nach Anspruch 1, wobei der einachsige retroreflektierende Spiegel eine Metaoberfläche einschließt.

**7.** Optisches Modul nach Anspruch 6, wobei die Metaoberfläche vom doppelseitigen Spiegel aus betrachtet eine konkave Form aufweist.

**8.** Optisches Modul nach Anspruch 1, wobei der doppelseitige Spiegel eine mikroelektromechanische Systemvorrichtung, MEMS-Vorrichtung (300), einschließt.

**9.** Entfernungsmessvorrichtung (101A), die das optische Modul nach Anspruch 1 umfasst und konfiguriert ist, um:

zu bewirken, dass Laserlicht auf eine Vorderoberflächenseite des doppelseitigen Spiegels auftrifft;
ein Objekt mit dem Laserlicht durch den Planspiegel zu bestrahlen;
Streulicht von dem Objekt durch den einachsigen retroreflektierenden Spiegel zu reflektieren; und
das von dem einachsigen retroreflektierenden Spiegel reflektierte Licht auf der Rückoberflächenseite des doppelseitigen Spiegels zu reflektieren und das Licht dann mit einem Lichtempfänger zu erfassen.

**10.** Entfernungsmessvorrichtung nach Anspruch 9, wobei der Lichtempfänger ein Halbleiterelement einschließt.

**11.** Entfernungsmessvorrichtung nach Anspruch 9, wobei der Lichtempfänger Interferenzlicht zwischen emittiertem Laserlicht und Streulicht empfängt.


**Revendications**

**1.** Module optique (130) comprenant :

un miroir double face (202) qui tourne ou subit un mouvement de pendule autour d'au moins un axe de rotation ;
un miroir plan (204) disposé à un angle de 45 degrés par rapport à une surface horizontale sur un côté de surface arrière (203) du miroir double face ; et
un miroir rétroréfléchissant uniaxial (205) disposé à un angle de 45 degrés par rapport à la surface horizontale sur un côté de surface avant (206) du miroir double face, dans lequel le miroir rétroréfléchissant uniaxial présente une paire de miroirs formant un angle de 90 degrés l'un avec l'autre, dans lequel la paire de miroirs est un réseau de miroirs de toit et est disposé dans une forme concave incurvée lorsqu'il est vu depuis le miroir double face, dans lequel le module optique comporte un axe de rétroréflexion perpendiculaire à la surface horizontale et à la ligne normale du miroir rétroréfléchissant uniaxial.

**2.** Module optique selon la revendication 1, dans lequel le miroir double face présente une lentille (207) disposée sur un côté de surface avant, la lentille présentant un centre d'axe optique sur une surface horizontale passant par un centre du miroir double face.

**3.** Module optique selon la revendication 2, dans lequel la lentille présente un point focal situé dans un trou d'épingle.

**4.** Module optique selon la revendication 1, dans lequel le miroir double face comporte un miroir parabolique disposé sur un côté de la surface avant, le miroir parabolique ayant un centre d'axe optique sur une surface horizontale passant par un centre du miroir double face.

**5.** Module optique selon la revendication 4, dans lequel le miroir parabolique présente un point focal situé dans un trou d'épingle.

**6.** Module optique selon la revendication 1, dans lequel le miroir rétroréfléchissant uniaxial comporte une métasurface.

**7.** Module optique selon la revendication 6, dans lequel la métasurface présente une forme concave lorsqu'elle est vue depuis le miroir double face.

**8.** Module optique selon la revendication 1, dans lequel le miroir double face comporte un dispositif de systèmes microélectromécaniques, MEMS (300).

**9.** Dispositif de mesure de distance (101A) comprenant le module optique selon la revendication 1, et étant configuré pour :

provoquer l'incidence de la lumière laser sur un côté de surface avant du miroir double face ;
irradier un objet avec la lumière laser à travers le miroir plan ;
réfléchir la lumière diffusée par l'objet par le miroir rétroréfléchissant uniaxial ; et

réfléchir la lumière réfléchie par le miroir rétroréfléchissant uniaxial sur le côté de surface arrière du miroir double face, puis détecter la lumière par un récepteur de lumière.

10. Dispositif de mesure de distance selon la revendication 9, dans lequel le récepteur de lumière comporte un élément semi-conducteur.

11. Dispositif de mesure de distance selon la revendication 9, dans lequel le récepteur de lumière reçoit la lumière d'interférence entre la lumière laser émise et la lumière diffusée.

*FIG. 1*

101

110 — MEASUREMENT OBJECT

131

130

109 — LIGHT SCANNING UNIT

101A

123

103 — CONTROL UNIT

104 — LIGHT SOURCE UNIT

105 — OPTICAL PATH BRANCHING UNIT

106

111

120 — SECOND LIGHT-RECEIVING UNIT

116 — SECOND SIGNAL-FORMING UNIT

115

107

118 — FIRST LIGHT-RECEIVING UNIT

119 — FIRST SIGNAL-FORMING UNIT

121

113 — TIME DIFFERENCE MEASURING UNIT

114

108

112

102 — INTERFACE

117 — LIGHT SOURCE MONITORING UNIT

122 — CALCULATION UNIT

# FIG. 2

# FIG. 3

# FIG. 4

# FIG. 5

EP 4 266 110 B1

FIG. 6

# FIG. 7

EP 4 266 110 B1

FIG. 8

FIG. 9

# FIG. 10

# FIG. 11

A

B

C

## FIG. 12

TOP

451

450

452

~401

# FIG. 13

A

B

C

## FIG. 14

FIG. 15

# FIG. 16

# FIG. 17

10m        1.5m

H

101A

**EP 4 266 110 B1**

**Patent documents cited in the description**

- JP 2010217782 A
- JP 2005148459 A